# EUROPÄISCHE PATENTSCHRIFT

(11) **EP 3 863 888 B1**
(45) Veröffentlichungstag und Bekanntmachung des Hinweises auf die Patenterteilung: **19.04.2023**
(21) Anmeldenummer: 19787197.3
(22) Anmeldetag: 10.10.2019
(51) Int. Cl.: B60N 2/75, B60R 21/02

(54) **SITZANORDNUNG IN EINEM FAHRZEUG MIT EINER SICHERHEITSEINRICHTUNG FÜR EINEN INSASSEN**
SEAT ARRANGEMENT IN A MOTOR VEHICLE WITH A PROTECTION SYSTEM FOR A PASSENGER
AGENCEMENT DE SIÈGES DANS UN VÉHICULE AUTOMOBILE AVEC UN SYTÈME DE PROTECTION POUR UN PASSAGER

(30) Priorität: 11.10.2018 DE 102018217361
(43) Veröffentlichungstag der Anmeldung: 18.08.2021
(73) Patentinhaber: VOLKSWAGEN AKTIENGESELLSCHAFT, 38440 Wolfsburg (DE)
(72) Erfinder: JOCKWER, Dennis, 38154 Königslutter (Glentorf) (DE); SCHÖNFISCH, Peter, 38486 Klötze (DE)
(86) Internationale Anmeldenummer: PCT/EP2019/077490
(87) Internationale Veröffentlichungsnummer: WO 2020/074646

(56) Entgegenhaltungen:
- DE-U1- 20 111 970
- US-A- 4 662 683

## Beschreibung

Die Erfindung betrifft eine Sitzanordnung in einem Fahrzeug mit zumindest einem Sitz und zumindest einer dem Sitz zugeordneten Sicherheitseinrichtung für einen auf dem Sitz sitzenden Insassen nach dem Oberbegriff des Hauptanspruchs.

Aus der DE 201 11 970 U1 ist eine Sitzanordnung in einem Fahrzeug der oben genannten Art mit einer dem Sitz zugeordneten Sicherheitseinrichtung bekannt. Die Sicherheitseinrichtung ist zwischen einer Nichtgebrauchsstellung, bei der die Sicherheitseinrichtung sich in der Sitzlehne befindet und einen Teilbereich der Sitzlehne ausbildet, und einer Seitenabstützstellung verschwenkbar gelagert. In der Seitenabstützstellung ist die Sicherheitseinrichtung horizontal ausgerichtet und hält die Insassen, vergleichbar mit einem Beckengurt, gegen ein Verrutschen bei starken Fahrzeugbeschleunigungen zurück. Die Sicherheitseinrichtung weist hierzu ein erstes Teilelement, das verschwenkbar an der Sitzlehne gelagert ist, und ein zweites Teilelement, das an dem ersten Teilelement schwenkbar gelagert ist, auf. In der in Fahrtrichtung des Fahrzeugs seitlich neben dem Insassen angeordneten, ausgeklappten Seitenabstützstellung ist ein Schulter- oder Thoraxbereich des Insassen abgestützt.

Die US 4 662 683 A offenbart einen Autokindersitz, der zum Anbringen auf einer erfindungsgemäßen Sitzanordnung geeignet ist. Der Autokindersitz weist zwei voneinander unabhängig an gegenüberliegenden Seiten des Autokindersitzes verschwenkbar gelagerte Teilelemente auf, wobei die Teilelemente von einer Nichtgebrauchsstellung in eine horizontale Gebrauchsstellung verschwenkbar sind.

Aus der DE 199 16 850 A1 ist eine derartige Sitzanordnung bereits bekannt. Dabei weist die Sitzanordnung eine Rücksitzbank mit zwei Sitzen auf, welchen eine Sicherheitseinrichtung für Insassen zugeordnet ist. Die Sicherheitseinrichtung besteht aus zumindest einem Airbag, welcher bei einem sensierten Fahrzeugaufprall aufgeblasen wird, sodass er in Fahrtrichtung vor den Insassen angeordnet ist und die Insassen bei einem Frontalaufprall abstützt.

Vor diesem Hintergrund liegt der Erfindung die Aufgabe zugrunde, eine Sitzanordnung der eingangs genannten Art derart auszuführen, dass eine Abstützung des Insassen auch bei einem Seiten- oder Schrägaufprall gewährleistet werden kann.

Diese Aufgabe wird gelöst mit einer Sitzanordnung gemäß den Merkmalen des Patentanspruchs 1. Die Unteransprüche betreffen besonders zweckmäßige Weiterbildungen der Erfindung.

Erfindungsgemäß ist also eine Sitzanordnung mit einer Sicherheitseinrichtung vorgesehen, welche zwischen einer eingeklappten Nichtgebrauchsstellung und einer in Fahrtrichtung seitlich neben dem Insassen angeordneten und einen Schulter- und/oder Thoraxbereich des Insassen abstützenden ausgeklappten Seitenabstützstellung verschwenkbar ist, wobei die Sicherheitseinrichtung aus zumindest zwei Teilelementen besteht und das erste Teilelement um eine sitz- oder karosserieseitig angeordnete erste Drehachse relativ zu dem Sitz und das zweite Teilelement um eine zweite Drehachse relativ zu dem ersten Teilelement verschwenkbar ist, wobei die erste Drehachse und die zweite Drehachse in einander abgewandten Endabschnitten des ersten Teilelements angeordnet sind, wobei die Drehachsen parallel zueinander ausgerichtet sind und sich horizontal in Fahrzeugquerrichtung erstrecken und wobei ein der zweiten Drehachse abgewandter Endabschnitt des zweiten Teilelements in der Seitenabstützstellung sitzseitig lösbar fixierbar ist, wobei an dem Endabschnitt des zweiten Teilelements ein Fixiermittel angeordnet ist, welches mit einem sitzseitigen Fixiermittel lösbar verbunden werden kann, und/oder der Endabschnitt des zweiten Teilelements in der Seitenabstützstellung lösbar an einer Führungsstange einer Kopfstütze fixierbar ist. Die in der Seitenabstützstellung angeordnete Sicherheitseinrichtung überdeckt den Schulter- oder Thoraxbereich des Insassen, sodass eine seitliche Abstützung des Insassen auch bei hohen Querbeschleunigungen und Querkräften, insbesondere bei einem Schräg- oder Seitenaufprall, gewährleistet werden kann. Die Sitzanordnung kann einen bzw. mehrere Einzelsitze umfassen, welchen zumindest eine Sicherheitseinrichtung zugeordnet ist. Die Sitzanordnung kann aber auch als Rücksitzbank ausgebildet sein und einen mittleren Sitz sowie zwei äußere benachbarte Sitze umfassen. In diesem Fall ist die Sicherheitseinrichtung der äußeren Sitze im Bereich des mittleren Sitzes angeordnet, sodass die in der Seitenabstützstellung angeordnete Sicherheitseinrichtung die Insassen auf beiden Sitzen gleichzeitig abstützt und dadurch auch eine Interaktion der Insassen bei einem Seitencrash bzw. Seitenaufprall wirksam verhindert.

Hierbei sind die erste Drehachse und die zweite Drehachse parallel zueinander und horizontal in Fahrzeugquerrichtung ausgerichtet. Durch eine derartige Anordnung der Drehachsen werden die beiden Teilelemente in einer in Fahrzeuglängsrichtung gerichteten Vertikalebene verschwenkt, sodass ein Kontakt der Teilelemente mit dem Insassen während der Schwenkbewegung von der Nichtgebrauchsstellung in die Seitenabstützstellung verhindert werden kann.

Indem ein der zweiten Drehachse abgewandter Endabschnitt des zweiten Teilelements in der Seitenabstützstellung sitzseitig lösbar fixierbar ist, können die Insassen bei einem Seitenaufprall effektiv abgestützt werden und die Kräfte können über die beiden Teilelemente in den Sitz bzw. das Sitzgestell eingeleitet und aufgenommen werden. Hierbei bilden die beiden Teilelemente der Sicherheitseinrichtung und der Sitz bzw. das Sitzgestell ein starres, die Querkräfte und Querbeschleunigungen aufnehmendes Dreieck.

Indem der Endabschnitt des zweiten Teilelements in der Seitenabstützstellung lösbar an einer Führungsstange einer Kopfstütze fixierbar ist, sind keine zusätzlichen sitzseitigen Fixiermittel erforderlich. In vorteilhafter Weise ist dabei die Sicherheitseinrichtung im Bereich des eine Kopfstütze aufweisenden mittleren Sitzes der als Rücksitzbank ausgebildeten Sitzanordnung angeordnet.

Eine besonders vorteilhafte Weiterbildung der vorliegenden Erfindung wird auch dadurch geschaffen, dass die beiden Teilelemente in der Nichtgebrauchsstellung parallel zueinander angeordnet sind und/oder dass die beiden Teilelemente in der Nichtgebrauchsstellung in einer sitzseitigen Ausnehmung versenkt angeordnet sind. Durch die parallele Anordnung der beiden Teilelemente ist die Sicherheitseinrichtung in der Nichtgebrauchsstellung kompakt zusammengeklappt und kann in vorteilhafter Weise versenkt in einer Ausnehmung in der Rückenlehne angeordnet werden. Die Sicherheitseinrichtung ist dabei vorzugsweise bündig mit der umgebenen Oberfläche der Rückenlehne angeordnet, sodass die Bewegungsfreiheit der beiden auf den äußeren Sitzen sitzenden Insassen nicht eingeschränkt und eine Nutzung des mittleren Sitzes als Sitzplatz für einen Insassen ermöglicht wird.

Weiterhin ist vorgesehen, dass die beiden Teilelemente in der Nichtgebrauchsstellung in Fahrtrichtung des Fahrzeugs nebeneinander oder hintereinander angeordnet sind. Je nach zur Verfügung stehendem Bauraum kann es sinnvoll sein, die Teilelemente entweder nebeneinander oder hintereinander anzuordnen.

Eine besonders vorteilhafte Ausgestaltung der Sicherheitseinrichtung wird auch dadurch zur Verfügung gestellt, dass diese zwischen der eingeklappten Nichtgebrauchsstellung und einer ausgeklappten Gebrauchsstellung verschwenkbar ist, wobei die beiden Teilelemente der Sicherheitseinrichtung in der Gebrauchsstellung parallel angeordnet sind und eine Armlehne bilden. Die beiden Teilelemente können also nicht nur von der Nichtgebrauchsstellung in die Seitenabstützstellung, sondern wahlweise auch in die Gebrauchsstellung überführt und als Armauflage für den auf den äußeren Sitzen sitzenden Insassen genutzt werden. Hieraus ergibt sich eine hohe Funktionsintegration.

Es hat sich außerdem als besonders zweckmäßig erwiesen, dass die beiden Teilelemente in der Seitenabstützstellung V-förmig angeordnet sind. Hierdurch wird eine optimale Überdeckung der in der Seitenabstützstellung angeordneten Sicherheitseinrichtung mit dem Thorax- und Schulterbereich des Insassen und gleichzeitig eine effektive Aufnahme von aus einem Seitenaufprall resultierenden Querbeschleunigungen bzw. Querkräften gewährleistet.

Die sitzseitige Fixierung des zweiten Teilelements kann durch eine lösbare Rast- oder Schnappverbindung oder durch eine andere geeignete lösbare Verbindung, insbesondere durch Form- oder Kraftschluss, erfolgen. Hierbei ist an dem betreffenden Endabschnitt des zweiten Teilelements ein beispielsweise als Rast- oder Schnappeinrichtung ausgebildetes Fixiermittel angeordnet, welches mit einem sitzseitigen Fixiermittel lösbar verbunden werden kann. Das sitzseitige Fixermittel kann beispielsweise an der Rückenlehne befestigt und als Haken oder Bügel oder als Top-Tether-Element ausgebildet sein.

Eine wiederum abgewandelte Ausführungsform der Erfindung sieht dagegen vor, dass das erste Teilelement in der Seitenabstützstellung eine im Wesentlichen horizontale Erstreckung aufweist. Hierdurch kann das erste Teilelement auch bei einer in der Seitenabstützstellung angeordneten Sicherheitseinrichtung als Armauflage von dem bzw. den Insassen genutzt werden. Darüber hinaus wird dadurch die seitliche Abstützung des Insassen bei einem Seitenaufprall verbessert, da die in der Seitenabstützstellung angeordnete Sicherheitseinrichtung neben dem Thorax- und Schulterbereich auch den Beckenbereich des Insassen überdeckt.

In diesem Fall erweist es sich als vorteilhaft, dass das zweite Teilelement zumindest ein aus diesem ausklappbares oder ausfahrbares Zusatzelement aufweist. Hierdurch kann die Länge des zweiten Teilelements derart vergrößert werden, dass das zweite Teilelement bzw. das Zusatzelement auch bei einem im Wesentlichen horizontal angeordneten ersten Teilelement sitzseitig fixierbar ist. Das Zusatzelement kann dabei über eine dritte Drehachse relativ zum zweiten Teilelement verschwenkt werden, wobei die dritte Drehachse in einem der zweiten Drehachse abgewandten Endabschnitt des zweiten Teilelements angeordnet ist. Alternativ kann das Zusatzelement oder mehrere Zusatzelemente teleskopartig aus dem zweiten Teilelement ausgefahren werden.

Hierbei hat es sich als besonders zweckmäßig erwiesen, dass die Sicherheitseinrichtung manuell zwischen der Nichtgebrauchsstellung und/oder der Seitenabstützstellung und/oder der Gebrauchsstellung verschwenkbar sind. Dabei erfolgt das Verschwenken der Sicherheitseinrichtung durch den Insassen, insbesondere unmittelbar nach dem Einsteigen in das Fahrzeug bzw. bei Stillstand des Fahrzeugs. Für das manuelle Ergreifen und Verschwenken der beiden Teilelemente können diese entsprechend ausgebildete Eingriffe, Griffe, Hebel oder Laschen aufweisen. Vorzugsweise weist die Sicherheitseinrichtung Rasteinrichtungen oder Feststelleinrichtungen auf, sodass die Teilelemente bei Erreichen der jeweiligen Stellung einrasten und in der Stellung fixiert sind. Darüber hinaus wird dem Nutzer dadurch auch eine entsprechend Rückmeldung geben, dass die Sicherheitseinrichtung die gewünschte Stellung erreicht hat.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung einer erfindungsgemäßen Sitzanordnung in einem Fahrzeug;
- Fig. 2: eine Seitenansicht eines Sitzes der Sitzanordnung mit einer zugeordneten Sicherheitseinrichtung in einer eingeklappten Nichtgebrauchsstellung;
- Fig. 3: eine Ansicht des Sitzes gemäß Figur 2 mit der Sicherheitseinrichtung in einer ersten Zwischenstellung während der Überführung in eine Seitenabstützstellung;
- Fig. 4: eine Ansicht des Sitzes gemäß Figur 2 mit der Sicherheitseinrichtung in einer zweiten Zwischenstellung während der Überführung in die Seitenabstützstellung;
- Fig. 5: eine Ansicht des Sitzes gemäß Figur 2 mit der in der Seitenabstützstellung angeordneten ausgeklappten Sicherheitseinrichtung;
- Fig. 6: eine Ansicht des Sitzes gemäß Figur 2 mit der in einer Gebrauchsstellung angeordneten Sicherheitseinrichtung;
- Fig. 7: eine Ansicht des Sitzes gemäß Figur 2 mit einer in der Seitenabstützstellung angeordneten zweiten Ausführungsform der Sicherheitseinrichtung.

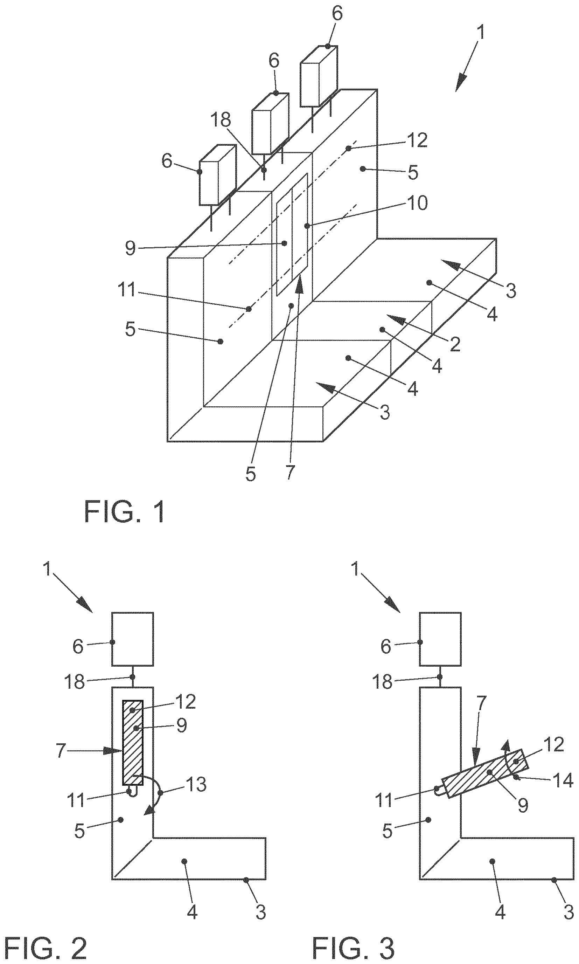

Anhand der Figuren 1 bis 7 wird nachfolgend eine erfindungsgemäße Sitzanordnung 1 für ein Fahrzeug beschrieben. Die Sitzanordnung 1 kann, wie in Figur 1 dargestellt, als mehrsitzige Rücksitzbank ausgebildet sein und einen mittleren Sitz 2 und zwei benachbarten äußere Sitze 3 aufweisen. Die Sitze 2, 3 umfassen dabei jeweils ein Sitzteil 4, eine Rückenlehne 5 und eine Kopfstütze 6.

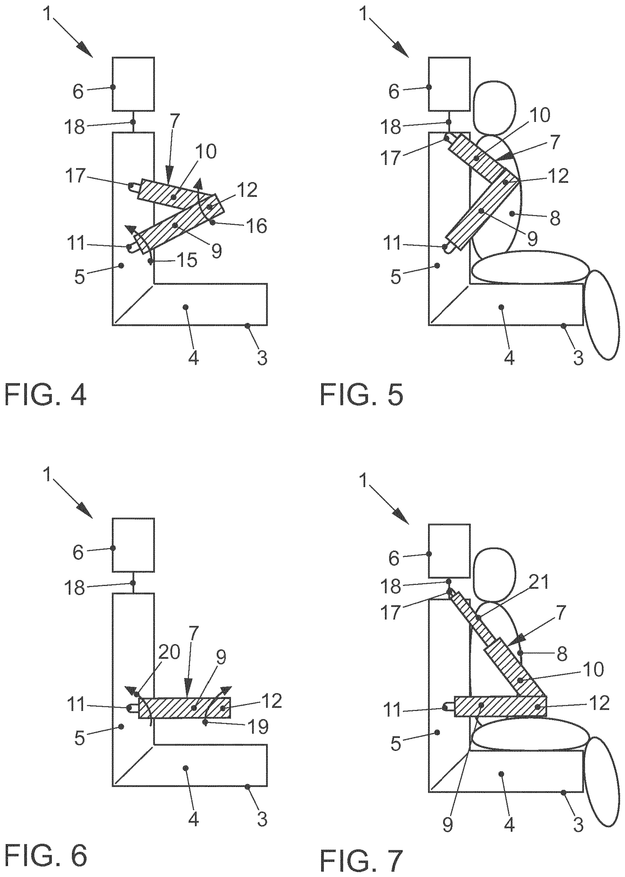

Den äußeren Sitzen 3 ist eine im Bereich des mittleren Sitzes 2 angeordnete Sicherheitseinrichtung 7 zugeordnet, welche von einer in Figur 1 und Figur 2 abgebildeten, eingeklappten bzw. hochgeklappten Nichtgebrauchsstellung in eine in Figur 5 abgebildete, ausgeklappte Seitenabstützstellung verschwenkbar ist. In der Seitenabstützstellung stützt die ausgeklappte Sicherheitseinrichtung 7 einen Schulter- und/oder Thoraxbereich eines auf dem jeweiligen äußeren Sitz 3 sitzenden Insassen 8 ab.

Die Sicherheitseinrichtung 7 umfasst zumindest zwei als Hebel ausgebildete Teilelemente 9, 10, wobei das erste Teilelement 9 sitzseitig fixiert und um eine erste Drehachse 11 relativ zu der Rückenlehne 5 des Sitzes 2, 3 verschwenkbar ist. Das zweite Teilelement 10 ist mit dem ersten Teilelement 9 verbunden und um eine zweite Drehachse 12 relativ zu dem ersten Teilelement 9 verschwenkbar. Hierbei sind die beiden Drehachsen 11, 12 in einander abgewandten Endabschnitten des ersten Teilelements 9 angeordnet, parallel zueinander ausgerichtet und erstrecken sich horizontal in Fahrzeugquerrichtung. In dem dargestellten Ausführungsbeispiel sind die beiden Teilelemente 9, 10 in der Nichtgebrauchsstellung in Fahrtrichtung nebeneinander angeordnet. Es ist jedoch auch denkbar, dass sie in Fahrtrichtung hintereinander angeordnet sind. Die Drehachsen 11, 12 werden durch ein entsprechend ausgebildetes und angeordnetes Scharnier oder Gelenk gebildet. Die beiden Teilelemente 9, 10 bestehen vorzugsweise aus einem Metalleinleger, welcher entsprechend der zu erwartenden Belastung dimensioniert und geformt ist und zumindest teilweise von einer, insbesondere gepolsterten, Verkleidung umschlossen ist.

In der Nichtgebrauchsstellung ist die eingeklappte Sicherheitseinrichtung 7 in einer Vertiefung bzw. Ausnehmung der Rückenlehne 5 des Mittelsitzes 2 versenkt angeordnet. Hierbei sind die beiden Teilelemente 9, 10 parallel zueinander ausgerichtet. Zur Überführung der Sicherheitseinrichtung 7 in die Seitenabstützstellung werden die beiden Teilelemente 9,10 zunächst gemeinsam um die erste Drehachse 11 relativ zur Rückenlehne 5 verschwenkt (siehe Richtungspfeil 13 in Figur 2). Anschließend wird das zweite Teilelement 10 um die zweite Drehachse 12 relativ zum ersten Teilelement 9 verschwenkt (siehe Richtungspfeil 14 in Figur 3), sodass sich die beiden Teilelemente 9, 10 V-förmig erstrecken (siehe Figur 4). Im weiteren Verlauf erfolgt sowohl ein Verschwenken des ersten Teilelements 9 um die erste Drehachse 11 (siehe Richtungspfeil 15 in Figur 4) als auch ein Verschwenken des zweiten Teilelements 10 um die zweite Drehachse 12 (siehe Richtungspfeil 16 in Figur 4) und zwar bis die beiden Teilelemente 9, 10 die in Figur 5 abgebildete und den Schulter- und/oder Thoraxbereich des Insassen seitlich abstützende Seitenabstützstellung erreicht haben.

Nachfolgend wird ein der zweiten Drehachse 12 abgewandter Endabschnitt des zweiten Teilelements 10 lösbar an der Rückenlehne 5 bzw. einem Sitzgestell fixiert, sodass die V-förmig aufgespannten Teilelemente 9, 10 der Sicherheitseinrichtung 7 fest an der Rückenlehne 5 fixiert sind und mit dieser ein Dreieck bilden, welches geeignet ist, die bei einem Seitencrash entstehenden Querbeschleunigungen bzw. Querkräfte aufzunehmen. Hierdurch wird eine Verlagerung des auf dem äußeren Sitz 3 sitzenden Insassen 8 in Richtung Fahrzeugmitte und eine Interaktion mit einem auf dem zweiten äußeren Sitz 3 der Sitzanordnung 1 sitzenden Insassen 8 wirksam verhindert. Zur sitzseitigen Fixierung des Endabschnitts des zweiten Teilelements 10 weist dieses ein Fixiermittel 17 auf, welches an einem nicht dargestellten sitzseitigen Fixiermittel oder an einer Führungsstange 18 einer dem mittleren Sitz 2 zugeordneten Kopfstütze 6 fixierbar ist. Die Fixierung des Endabschnitts an der Rückenlehne 5 oder an der Kopfstütze 6 kann durch eine lösbare Schnapp- oder Rastverbindung oder durch eine andere geeignete lösbare, kraft- oder formschlüssige Verbindung erfolgen.

Figur 6 zeigt eine abgewandelte Ausführungsform der Sicherheitseinrichtung 7, nach welcher diese durch eine gemeinsame Schwenkbewegungen der beiden parallel angeordneten eingeklappten Teilelemente 9, 10 um die erste Drehachse 11 zwischen der in Figur 2 abgebildeten Nichtgebrauchsstellung und einer Gebrauchsstellung verschwenkbar sind. In der Gebrauchsstellung erstrecken sich die weiterhin parallel angeordneten Teilelemente 9, 10 im Wesentlichen in horizontaler Richtung und bilden eine für den Insassen 8 nutzbare Armlehne. Aus der dargestellten Gebrauchsstellung lässt sich die Sicherheitseinrichtung 7 dann durch Verschwenken des zweiten Teilelements 10 um die zweite Drehachse 12 (Richtungspfeil 19) und durch gemeinsames Verschwenken der beiden Teilelemente 9, 10 um die erste Drehachse 11 (siehe Richtungspfeil 20) analog der Figuren 3 bis 5 in die Seitenabstützstellung überführen.

Eine weitere Abwandlung der Sicherheitseinrichtung 7 ist in Figur 7 dargestellt. Hierbei weist das erste Teilelement 9 in der Seitenabstützstellung eine im Wesentlichen horizontale Erstreckung auf, sodass dieses bei einer in der Seitenabstützstellung angeordneten Sicherheitseinrichtung 7 von dem Insassen 8 als Armlehne nutzbar ist. Hierbei kann die Länge des zweiten Teilelements 10 durch ein aus diesem ausfahrbares oder ausklappbares Zusatzelement 21 derart vergrößert werden, dass das zweite Teilelement 10 bzw. das Zusatzelement 21 sitzseitig fixiert werden kann. In diesem Fall ist das Fixiermittel 17 dann in einem der zweiten Drehachse 12 abgewandten Endabschnitt des Zusatzelements 21 angeordnet. Wie in Figur 7 gut zu erkennen ist, ergibt sich bei dieser Ausgestaltung eine verbesserte Abstützung des Insassen 8, da die in der Seitenabstützstellung angeordnete Sicherheitseinrichtung 7 neben dem Thorax- und Schulterbereich auch den Beckenbereich des Insassen 8 seitlich überdeckt.

Das Verschwenken der Sicherheitseinrichtung 7 bzw. der beiden Teilelemente 9, 10 zwischen der Nichtgebrauchsstellung und der Seitenabstützstellung oder der Gebrauchsstellung erfolgt manuell durch den jeweiligen Insassen 8. Dabei sollte das Verschwenken in die jeweilige Stellung vorzugsweise bei stehendem Fahrzeug erfolgen. Ein Verschwenken während der Fahrt ist ebenso möglich. Darüber hinaus ist es auch denkbar, die Schwenkbewegung der beiden Teilelemente 9, 10 durch geeignete Antriebe durchzuführen bzw. zu unterstützen. Eine Schwenkbewegung kann zumindest teilweise auch in Abhängigkeit der Signale einer Pre-Crash bzw. Pre-Safe-Sensorik durchgeführt werden.

### Bezugszeichenliste

- 1: Sitzanordnung
- 2: Sitz
- 3: Sitz
- 4: Sitzteil
- 5: Rückenlehne

- 6: Kopfstütze
- 7: Sicherheitseinrichtung
- 8: Insasse
- 9: erstes Teilelement
- 10: zweites Teilelement

- 11: erste Drehachse
- 12: zweite Drehachse
- 13: Richtungspfeil
- 14: Richtungspfeil
- 15: Richtungspfeil

- 16: Richtungspfeil
- 17: Fixiermittel
- 18: Führungsstange
- 19: Richtungspfeil
- 20: Richtungspfeil

- 21: Zusatzelement

## Patentansprüche

1. Sitzanordnung (1) in einem Fahrzeug mit zumindest einem Sitz (3) und zumindest einer dem Sitz (3) zugeordneten Sicherheitseinrichtung (7) für einen auf dem Sitz (3) sitzenden Insassen (8), wobei die Sicherheitseinrichtung (7) zwischen einer eingeklappten Nichtgebrauchsstellung und einer in Fahrtrichtung des Fahrzeugs seitlich neben dem Insassen (8) angeordneten und einen Schulter- und/oder Thoraxbereich des Insassen (8) abstützende ausgeklappten Seitenabstützstellung verschwenkbar ist, wobei die Sicherheitseinrichtung (7) aus zumindest zwei Teilelementen (9, 10) besteht und das erste Teilelement (9) um eine sitz- oder karosserieseitig angeordnete erste Drehachse (11) relativ zu dem Sitz (3) und das zweite Teilelement (10) um eine zweite Drehachse (12) relativ zu dem ersten Teilelement (9) verschwenkbar ist, wobei die erste Drehachse (11) und die zweite Drehachse (12) in einander abgewandten Endabschnitten des ersten Teilelements (9) angeordnet sind, **dadurch gekennzeichnet, dass** die Drehachsen (11, 12) parallel zueinander ausgerichtet sind und sich horizontal in Fahrzeugquerrichtung erstrecken und dass ein der zweiten Drehachse (12) abgewandter Endabschnitt des zweiten Teilelements (10) in der Seitenabstützstellung sitzseitig lösbar fixierbar ist, wobei an dem Endabschnitt des zweiten Teilelements (10) ein Fixiermittel (17) angeordnet ist, welches mit einem sitzseitigen Fixiermittel lösbar verbunden werden kann, und/oder der Endabschnitt des zweiten Teilelements (10) in der Seitenabstützstellung lösbar an einer Führungsstange (18) einer Kopfstütze (6) fixierbar ist.

2. Sitzanordnung (1) nach Anspruch 1, **dadurch gekennzeichnet, dass** die beiden Teilelemente (9, 10) in der Nichtgebrauchsstellung parallel zueinander angeordnet sind und/oder dass die beiden Teilelemente (9, 10) in der Nichtgebrauchsstellung in einer sitzseitigen Ausnehmung angeordnet sind.

3. Sitzanordnung (1) nach den Ansprüchen 1 oder 2, **dadurch gekennzeichnet, dass** die beiden Teilelemente (9, 10) in der Nichtgebrauchsstellung in Fahrtrichtung des Fahrzeugs nebeneinander oder hintereinander angeordnet sind.

4. Sitzanordnung (1) nach zumindest einem der vorangehenden Ansprüche, **dadurch gekennzeichnet, dass** die Sicherheitseinrichtung (7) zwischen der eingeklappten Nichtgebrauchsstellung und einer ausgeklappten Gebrauchsstellung verschwenkbar ist, wobei die beiden Teilelemente (9, 10) der Sicherheitseinrichtung in der Gebrauchsstellung parallel angeordnet sind und eine Armlehne bilden.

5. Sitzanordnung (1) nach zumindest einem der vorangehenden Ansprüche, **dadurch gekennzeichnet, dass** die beiden Teilelemente (9, 10) in der Seitenabstützstellung V-förmig angeordnet sind.

6. Sitzanaordnung (1) nach zumindest einem der vorangehenden Ansprüche, **dadurch gekennzeichnet, dass** das erste Teilelement (9) in der Seitenabstützstellung eine horizontale Erstreckung aufweist.

7. Sitzanordnung (1) nach zumindest einem der vorangehenden Ansprüche, **dadurch gekennzeichnet, dass** das zweite Teilelement (10) zumindest ein aus diesem ausklappbares oder ausfahrbares Zusatzelement (21) aufweist.

8. Sitzanordnung (1) nach zumindest einem der vorangehenden Ansprüche, **dadurch gekennzeichnet, dass** die Teilelemente (9, 10) der Sicherheitseinrichtung (7) manuell zwischen der Nichtgebrauchsstellung und/oder der Seitenabstützstellung und/oder der Gebrauchsstellung verschwenkbar sind.

## Claims

1. Seat arrangement (1) in a vehicle, with at least one seat (3) and at least one safety device (7), which is assigned to the seat (3), for an occupant (8) sitting on the seat (3), wherein the safety device (7) is pivotable between a folded-up non-use position and an unfolded side support position which is arranged laterally next to the occupant (8) in the direction of travel of the vehicle and supports a shoulder region and/or thorax region of the occupant (8), wherein the safety device (7) consists of at least two sub-elements (9, 10), and the first sub-element (9) is pivotable relative to the seat (3) about a first axis of rotation (11) arranged on the seat side or body side, and the second sub-element (10) is pivotable relative to the first sub-element (9) about a second axis of rotation (12), wherein the first axis of rotation (11) and the second axis of rotation (12) are arranged in mutually averted end portions of the first sub-element (9), **characterized in that** the axes of rotation (11, 12) are oriented parallel to each other and extend horizontally in the transverse direction of the vehicle, and **in that** an end portion of the second sub-element (10) averted from the second axis of rotation (12) is fixable releasably on the seat side in the side support position, wherein a fixing means (17) which can be releasably connected to a seat-side fixing means is arranged on the end portion of the second sub-element (10), and/or the end portion of the second sub-element (10) is fixable releasably to a guide rod (18) of a headrest (6) in the side support position.

2. Seat arrangement (1) according to Claim 1, **characterized in that** the two sub-elements (9, 10) are arranged parallel to each other in the non-use position, and/or **in that** the two sub-elements (9, 10) are arranged in a seat-side recess in the non-use position.

3. Seat arrangement (1) according to Claim 1 or 2, **characterized in that** the two sub-elements (9, 10) are arranged next to each other or one behind the other in the direction of travel of the vehicle in the non-use position.

4. Seat arrangement (1) according to at least one of the preceding claims, **characterized in that** the safety device (7) is pivotable between the folded-up non-use position and an unfolded use position, wherein the two sub-elements (9, 10) of the safety device are arranged parallel in the use position and form an armrest.

5. Seat arrangement (1) according to at least one of the preceding claims, **characterized in that** the two sub-elements (9, 10) are arranged in a V-shaped manner in the side support position.

6. Seat arrangement (1) according to at least one of the preceding claims, **characterized in that** the first sub-element (9) has a horizontal extent in the side support position.

7. Seat arrangement (1) according to at least one of the preceding claims, **characterized in that** the second sub-element (10) has at least one additional element (21) which can be unfolded or can be extended out of the latter.

8. Seat arrangement (1) according to at least one of the preceding claims, **characterized in that** the sub-elements (9, 10) of the safety device (7) are pivotable manually between the non-use position and/or the side support position and/or the use position.

## Revendications

1. Agencement de siège (1) dans un véhicule avec au moins un siège (3) et au moins un dispositif de sécurité (7) associé au siège (3) pour un occupant (8) assis sur le siège (3), le dispositif de sécurité (7) pouvant pivoter entre une position de non-utilisation repliée et une position de soutien latéral dépliée agencée latéralement à côté de l'occupant (8) dans la direction de déplacement du véhicule et soutenant une zone d'épaule et/ou de thorax de l'occupant (8), le dispositif de sécurité (7) étant constitué d'au moins deux éléments partiels (9, 10) et le premier élément partiel (9) pouvant pivoter par rapport au siège (3) autour d'un premier axe de rotation (11) agencé du côté du siège ou de la carrosserie et le deuxième élément partiel (10) pouvant pivoter par rapport au premier élément partiel (9) autour d'un deuxième axe de rotation (12), le premier axe de rotation (11) et le deuxième axe de rotation (12) étant agencés dans des sections d'extrémité détournées l'une de l'autre du premier élément partiel (9), **caractérisé en ce que** les axes de rotation (11, 12) sont orientés parallèlement l'un à l'autre et s'étendent horizontalement dans la direction transversale du véhicule et **en ce qu'**une section d'extrémité du deuxième élément partiel (10) détournée du deuxième axe de rotation (12) peut être fixée de manière amovible du côté du siège dans la position de soutien latéral, un moyen de fixation (17) étant agencé sur la section d'extrémité du deuxième élément partiel (10), lequel peut être relié de manière amovible à un moyen de fixation du côté du siège, et/ou la section d'extrémité du deuxième élément partiel (10) pouvant être fixée de manière amovible à une tige de guidage (18) d'un appui-tête (6) dans la position de soutien latéral.

2. Agencement de siège (1) selon la revendication 1, **caractérisé en ce que** les deux éléments partiels (9, 10) sont agencés parallèlement l'un à l'autre dans la position de non-utilisation et/ou **en ce que** les deux éléments partiels (9, 10) sont agencés dans un évidement du côté du siège dans la position de non-utilisation.

3. Agencement de siège (1) selon la revendication 1 ou 2, **caractérisé en ce que** les deux éléments partiels (9, 10) sont agencés l'un à côté de l'autre ou l'un derrière l'autre dans la direction de déplacement du véhicule dans la position de non-utilisation.

4. Agencement de siège (1) selon au moins l'une quelconque des revendications précédentes, **caractérisé en ce que** le dispositif de sécurité (7) peut pivoter entre la position de non-utilisation repliée et une position d'utilisation dépliée, les deux éléments partiels (9, 10) du dispositif de sécurité étant agencés parallèlement dans la position d'utilisation et formant un accoudoir.

5. Agencement de siège (1) selon au moins l'une quelconque des revendications précédentes, **caractérisé en ce que** les deux éléments partiels (9, 10) sont agencés en forme de V dans la position de soutien latéral.

6. Agencement de siège (1) selon au moins l'une quelconque des revendications précédentes, **caractérisé en ce que** le premier élément partiel (9) présente une extension horizontale dans la position de soutien latéral.

7. Agencement de siège (1) selon au moins l'une quelconque des revendications précédentes, **caractérisé en ce que** le deuxième élément partiel (10) présente au moins un élément supplémentaire (21) pouvant être déplié ou sorti de celui-ci.

8. Agencement de siège (1) selon au moins l'une quelconque des revendications précédentes, **caractérisé en ce que** les éléments partiels (9, 10) du dispositif de sécurité (7) peuvent être pivotés manuellement entre la position de non-utilisation et/ou la position de soutien latéral et/ou la position d'utilisation.
